# EUROPÄISCHE PATENTSCHRIFT

(11) **EP 1 470 655 B1**
(45) Veröffentlichungstag und Bekanntmachung des Hinweises auf die Patenterteilung: **12.03.2014**
(21) Anmeldenummer: 02779549.1
(22) Anmeldetag: 11.11.2002
(51) Int. Cl.: H04B 7/155

(54) **DIGITALER REPEATER MIT BANDPASSFILTERUNG, ADAPTIVER VORENTZERRUNG UND UNTERDRÜCKUNG DER EIGENSCHWINGUNG**
DIGITAL REPEATER HAVING BANDPASS FILTERING, ADAPTIVE PRE-EQUALIZATION AND SUPPRESSION OF NATURAL OSCILLATION
REPETITEUR NUMERIQUE A FILTRAGE PASSE-BANDE, PREACCENTUATION ADAPTATIVE ET SUPPRESSION DE L'OSCILLATION PROPRE

(30) Priorität: 12.11.2001 DE 10155179
(43) Veröffentlichungstag der Anmeldung: 27.10.2004
(73) Patentinhaber: Andrew Wireless Systems GmbH, 86675 Buchdorf (DE)
(72) Erfinder: KUMMETZ, Thomas, Forest, VA 24551 (US)
(74) Vertreter: Dreykorn-Lindner, Werner
(86) Internationale Anmeldenummer: PCT/EP2002/012573
(87) Internationale Veröffentlichungsnummer: WO 2003/043216

(56) Entgegenhaltungen:
- EP-A- 1 087 559
- US-A- 4 701 935
- US-A- 4 782 525

## Beschreibung

Die Erfindung betrifft in erster Linie einen Repeater mit einer digitalen Signalverarbeitungsvorrichtung zur Bandpassfilterung oder zur Unterdrückung der Eigenschwingung des Repeaters (Oberbegriff des Patentanspruchs 1).

Zur Füllung von Versorgungslücken, beispielsweise in digitalen terrestrischen Rundfunksystemen, werden Repeaterverstärker eingesetzt, deren Sende- und Empfangsantennen aufgrund einer Strahlungskopplung parasitär rückgekoppelt sind. Wenn die Verstärkung eines Repeaterverstärkers die Entkopplungsdämpfung zwischen dessen Sende- und Empfangsantenne erreicht, gerät dieser in Schwingung.

Um Schwingungen und damit einen instabilen Betrieb zu vermeiden, muss die Verstärkung um einen Sicherheitsabstand kleiner sein als die Entkopplungsdämpfung. Unter dem Sicherheitsabstand versteht man ganz allgemein die in dB gemessene Differenz zwischen der Entkopplungsdämpfung zwischen dem Ein- und Ausgang eines Verstärkers und dessen Verstärkungsfaktor. Um einen stabilen Betrieb zu gewährleisten, sind bisher bekannte, geregelte Verstärker oder Repeaterverstärker derart ausgebildet, dass deren Verstärkung statisch um einen erheblichen Sicherheitsabstand, beispielsweise um 15 dB, unter einer gemessenen mittleren Entkopplungsdämpfung eingestellt wird. Bei den herkömmlichen Repeaterverstärkern, deren Verstärkung unabhängig von der aktuellen Entkopplungsdämpfung eingestellt wird, ist es ferner sehr schwierig festzustellen, ob der Sicherheitsabstand bezüglich des Schwingeinsatzpunktes mit viel zu großer Reserve eingestellt worden ist und dadurch Versorgungsreichweite und -qualität verschenkt wird, wodurch der Repeater unwirtschaftlich betrieben wird.

Aus der DE 199 23 790 A1 ist eine Schaltungsanordnung sowie ein Verfahren zum adaptiven Regeln der Verstärkung eines rückgekoppelten Verstärkers für digitale Signale bekannt, welche eine weiteren Ausführungsform zu der DE 197 52.283 A1 dargestellt. Bei dem in der DE 197 52 283 A1 beschriebenen Verfahren wird der Arbeitspunkt des Verstärkers derart verschoben, dass ein voreingestellter Schwingabstand des rückgekoppelten Verstärkers zum Schwingeinsatzpunkt gewährleistet ist. Als Schwingabstand wird der Abstand zwischen der Verstärkung Vo, der im Verstärker enthaltenden Verstärkerstufen und der Verstärkung Vs, bei welcher der Verstärker in Schwingung geraten würde, verstanden. Dieser Ansatzpunkt ergibt sich aus der Tatsache, dass der Schwingabstand des Verstärkers ein eindeutiges Maß für die Stärke der sich in dem Verstärker einstellenden Mitkopplung ist. Um einen vorgegebenen Sicherheitsabstand eines rückgekoppelten Verstärkers von dessen zeitlich schwankenden Schwingeinsatzpunktes gewährleisten zu können, ist die in der Schaltungsanordnung nach der DE 197 52 283 A1 eingesetzte Überwachüngs- und Auswerteeinrichtung zum Überwachen und Auswerten einer Änderung des Signalpegels am Ausgang des Verstärkers ausgebildet.

Um zu verhindern, dass der Verstärker in Schwingung versetzt wird, darf der Abstand zwischen der geregelten Verstärkung Vo der im Verstärker enthaltenen Verstärkerstufen und der Verstärkung Vs, bei der es in dem Verstärker zum Einsetzen von Schwingungen kommen würde, nicht unterschritten werden. Hierzu weist die Schaltungsanordnung einen Speicher auf, in dem ein vorbestimmter Schwingabstand, der durch das Verhältnis Vs/V0 definiert wird, abgelegt ist.

Ferner ist die Überwachungs- und Auswerteeinrichtung derart ausgebildet, dass sie aus der Änderung des Signalpegels am Verstärkerausgang in Abhängigkeit von der Änderung der vorbestimmten Verstärkung um den ersten vorbestimmten Betrag den aktuellen Schwingabstand des Verstärkers ermitteln und diesen mit dem gespeicherten Schwingabstand vergleichen kann.
- Wenn der vorbestimmte Schwingabstand unterschritten wird, wird die vorbestimmte Verstärkung Vo um den zweiten vorbestimmten Betrag abgesenkt.
- Wenn hingegen der aktuell ermittelte Schwingabstand größer als der gespeicherte Schwingabstand ist, wird die Verstärkung Vo des Verstärkers um den zweiten vorbestimmten Betrag angehoben, was einer Anhebung des Arbeitspunktes des Verstärkers entspricht.

Die Einrichtung zum periodischen wandern kann ein Dämpfungselement zum periodischen Absenken der vorbestimmten Verstärkung enthalten. Denn mit dem Absenken der vorbestimmten Verstärkung des Verstärkers um den ersten vorbestimmten Betrag wird der Schwingabstand bereits während der Überwachungs- und Auswertephase vorübergehend .vergrößert, wodurch die Selbsterregungsgefahr des Verstärkers während dieser Zeitspanne verringert werden kann.

Das Verfahren zum adaptiven Regeln der Verstärkung eines rückgekoppelten Verstärkers umfasst nach der DE 197 52 283 A1 folgende Verfahrensschritte:
- Voreinstellen der Verstärkung Vo des Verstärkers;
- periodisches Ändern der voreingestellten Verstärkung Vo um einen ersten vorbestimmten Betrag;
- Überwachen und Auswerten einer Änderung des Signalpegels am Verstärkerausgang während des periodischen Änderns der voreingestellten Verstärkung; und
- Anheben oder Absenken der voreingestellten Verstärkung Vo um einen zweiten vorbestimmten Betrag in Abhängigkeit von der während des periodischen Änderns der vorbestimmten Verstärkung ausgewerteten Änderung des Signalpegels am Verstärkerausgang.

In zellularen Funknetzen werden häufig Repeater zur Erweiterung der Funkversorgung, z. B. in Tunneln, großen Gebäuden oder zur Versorgung von sich im Funkschatten befindlichen Gebieten eingesetzt, und immer dann, wenn die Installation einer Basisstation zu aufwendig ist.

Prinzip herkömmlicher Repeater ist die bidirektionale Verstärkung der Funksignale in Uplink- und Downlink-Richtung, wobei die Funksignale auf derselben Frequenz wieder ausgesendet werden, auf der sie empfangen wurden. Das Downlink-Signal, also das von der Basisstation des Funknetzes kommende Signal, wird mit einer Anbindungsantenne empfangen, im Repeater verstärkt, möglicherweise gefiltert und über eine Versorgungsantenne zur Mobilstation ausgesendet. Gleichzeitig wird das von der Mobilstation kommende Uplink-Signal mit der Versorgungsantenne empfangen, im Repeater verstärkt, möglicherweise gefiltert und über die Anbindungsantenne zur Basisstation ausgesendet. Dies kann sowohl kanalselektiv in verschiedenen Verstärkein als auch bandselektiv für jeden Repeaterzweig erfolgen. Die Kopplung der beide Repeaterzweige an die Antennen erfolgt in der Regel mit Duplex-Filtern. Bei dieser bekannten Arbeitsweise von Repeatern treten naturgemäß Verzerrungen des Signals auf (Phasen- und Amplitudenfehler, sowie Rauschen), die sich sehr nachteilig auf die Funkverbindung auswirken können. Außerdem hat ein Repeater bekannter Bauart nur eine begrenzte Dynamik, die sich durch das Rauschen der Eingangsstufen, die gewünschte Verstärkung und die maximal zulässige Ausgangsleistung des Repeaters ergibt.

Um die Übertragungsqualität der Signale wesentlich zu verbessern, ist aus der DE 196 49 853 ein Repeater für Funksignale bekannt, der die empfangenen Funksignale, eines digitalen zellularen Mobilfunknetzes, demoduliert, die digitalen Daten über eine geeignete Datenverbindung, z. B. LAN, über eine gewisse Distanz überträgt und anschließend neu moduliert, verstärkt und wieder als Funksignale aussendet. Hierzu enthält jeder Repeater folgende Funktionseinheiten:
Empfänger, Kanalfilter, Verstärker und Demodulator für den Uplink-Zweig; Modulator und Sendeverstärker für den Downlink-Zweig; sowie mindestens ein Dateninterface.

Das Dateninterface selbst beinhaltet im wesentlichen folgende Funktionseinheiten:
Multiplexer, Demultiplexer, Datenfluss-Steuerung und Schnittstellenadapter.

Der Vorteil dieses Repeater liegt darin, dass die für die räumliche Isolation von Anbindungs- und Versorgungsantenne oder aus anderen Gründen notwendige Distanz zwischen beiden Antennen mittels einer kostengünstigen Datenleitung anstatt einer bisher verwendeten hochwertigen Hochfrequenzleitung überbrückt werden kann. Weiterer Vorteil ist, dass Probleme der Signalverzerrung durch Rauschen, Intermodulation und Phasenverzerrungen durch die eingesetzte Digitaltechnik vermieden werden. Die digitale Übertragung des demodulierten Signals zwischen den beiden Teilgeräten des Repeaters kann über eine relativ große Distanz erfolgen, ohne aufgrund der eingesetzten Digitaltechnik an Signalqualität zu verlieren. Begrenzend wirkt hierbei nur die maximal zulässige Verzögerungszeit.

Ähnlich ist der aus der DE 196 49 854 bekannte. Repeater für Funksignale ausgestaltet, bei welchem die empfangenen Funksignale demoduliert, und die so gewonnen, digitalen Datenströme anschließend wieder neu moduliert und aussendet. Dabei wird vorzugsweise die Empfangsfeldstärke gemessen und als Steuersignal für die Ausgangsleistung des Sendeverstärkers verwendet. Jeder Repeaterzweig umfasst im wesentlichen folgende Funktionseinheiten: Duplex-Filter, Vorverstärker, Lokaloszillator, Mischer, Kanalfilter, Demodulator, Modulator und Sendeverstärker.

Bei Funknetzen, die mit TDMA (Time Division Multiple Access: Vielfach-Zugriff im Zeitmultiplex) arbeiten, erfolgt die Messung der Empfangsfeldsstärke auf Zeitschlitzbasis. Der nun demodulierte, digitale Datenstrom wird einem Modulator zugeführt, verstärkt und wieder normgerecht ausgesendet. Bei dieser Signalverarbeitung erfolgt jedoch keine Kanaldecodierung, wobei Vorteil der internen, digitalen Signalverarbeitung ist, dass Signalverzerrungen und Störungen wirkungsvoll minimiert werden können, so dass die Qualität der Funkversorgung wesentlich verbessert wird. Die Funktionseinheiten je Repeaterzweig, wie Vorverstärken, Mischer, Lokaloszillator, Kanalfilter, Demodulator, Modulator und Sendeverstärker, werden gegebenenfalls entsprechend der Anzahl der Hochfrequenzkanäle mehrfach parallel geschaltet. Über eine Datenverbindung in Form eines Funkkanals zwischen Repeater und Basisstation, welcher einer der vom Repeater verwendeten Kanäle ist, lässt sich darüber hinaus eine Fernüberwachung und/oder Fernsteuerung des Repeaters durchführen. Diese Datenverbindung wird durch eine Baugruppe realisiert, welche die Funktionalität einer datenfähigen Mobilstation besitzt. Diese kann entweder direkt mit der Anbindungsantenne gekoppelt sein oder über einen Mulitplexer/Demultiplexer auf die digitalen, demodulierten Datenströme der beiden Repeaterzweige zugreifen.

Schließlich ist aus der DE 196 49 855 A1 ein mobiler Repeater bekannt. Das von der Mobilstation kommende Funksignal wird über einen Duplex-Filter einem Vorverstärker zugeführt und über einen Mischer in sein Basisfrequenzband bzw. eine Zwischenfrequenz herabgesetzt.. Die Mischfrequenz wird durch einen Lokalöszillator erzeugt. Das Basisbandsignal wird über einen Kanalfilter auf einen Demodulator geleitet. Nach dem Demodulator liegt der demodulierte, digitale Datenstrom vor. Dieser wird nun durch einen Modulator entsprechend aufbereitet und auf eine Trägerfrequenz moduliert, durch einen Sendeverstärker verstärkt und über einen weiteren Duplexfilter von der Versorgungsantenne 2 zur Mobilstation hin abgestrahlt. Der mobile Repeater verfügt weiterhin über eine intelligente Steuereinheit, welche den Signalisierungsverkehr zwischen Basisstationen und Mobilstationen, sowie die jeweiligen Empfangsfeldstärken überwacht und entsprechend auswertet. Somit ist es möglich, die Verbindung der Mobilstation mit einer Basisstation der jeweils günstigsten Basisstation zuzuordnen und einen Zellenwechsel (Handover) zu unterstützen.

Neben den vorstehend beschriebenen kanalselektiven Repeatern sind auch bandselektive Repeater bekannt, welche ein ganzes Frequenzband mit mehreren Kanälen auf einer Zwischenfrequenz filtern und es verstärken. Hierzu ist ebenfalls eine hohe Selektivität der Filterung erforderlich, um Störungen an den Bandgrenzen zu vermeiden. Das Problem der linearen Repeater ist nun, dass Rückkopplungen über die beiden Antennen zu fatal störenden Einflüssen führen können. Darum müssen die Antennen bei den linearen Repeatern entkoppelt werden. Zur Entkopplung linearer Repeater sind zwei Antennen erforderlich, die zudem noch voneinander entfernt angeordnet werden müssen und hohe Kosten verursacht. Der Installations- und Wartungsaufwand ist außerdem recht hoch, weil die Feldstärken in der Umgebung eines Repeaters sorgfältig ausgemessen und der Repeater aufwendig angepasst werden muss.

Um ein System zur drahtlosen Telephonie mit einem entsprechend angepassten Mobilfunk-Repeater zu schaffen ist es aus der DE 196 48 178 A1 bekannt, die Trägerfrequenz durch eine erste Umsetzung auf eine andere Frequenz im selben Band umzusetzen. Um zu vermeiden, dass die Endgeräte die Informationen auf der umgesetzten Frequenzen mit der nicht standardgemäßen Zuordnung auswerten und dann fehlerhaft reagieren können, ist vorgesehen, die Frequenzlage der Modulation zusätzlich zu spiegeln. Zur Verhinderung, dass die Empfänger eine Spiegelfrequenz empfangen, werden die erzeugten Signale in dem unteren Teil des Bandes übertragen. Hierzu enthält der Repeater:
- zwei parallele Eingangsverstärker für die Eingangssignale,
- jeweils einen Mischer an den Ausgängen der Eingangsverstärker,
- jeweils einen Bandpassfilter an den Ausgängen der Mischer,
- jeweils einen Ausgangsverstärker an den Ausgängen der Filter, wobei die Ausgänge der Ausgangsverstärker zur Bildung eines Ausgangssignals zusammengeschaltet sind,
- mindestens einen mit den Mischern verbundenen Oszillator; wobei
- die Mischer jeweils eine Frequenz des Eingangssignals auf eine andere Frequenz innerhalb des Frequenzbandes des Systems umsetzen und
- die Frequenzlage der Modulation auf der Frequenzachse der anderen Frequenz spiegeln.

Schließlich ist aus der EP 1 087 559 A1 ein Repeater für ein Mobilfunknetz bekannt, bei dem mit Mitteln der digitalen Signalverarbeitung die unerwünschte Kopplung zwischen dem Signalweg in Empfangsrichtung und Signalweg in Senderichtung vermieden wird. Hierzu wird mittels digitaler Signalverarbeitung ein dem realen Echosignal nachgebildetes Echosignal erzeugt und das so erzeugte Echosignal vom realen Echosignal subtrahiert, so dass bis auf einen Restfehler das Echo kompensiert wird. Im einzelnen enthält die digitale Signalverarbeitung ein adaptives komplexes Filter, eine Einrichtung zur Einstellung der Filterkoeffizienten, welche einen Qudraturdemodulator zur Umsetzung des Empfangssignals oder Ausgangssignals in ein äquivalentes Basisbandsignal aufweist, einen FFT-Prozessor (Fast Fourier Transform), welcher ein Schätzsignal aus dem äquivalenten Basisbandsignal erzeugt, und einen DSP-Prozessor (Digital Signal Process). Der DSP-Prozessor erzeugt aus dem Schätzsignal des FFT-Prozessors eine komplexe Impulsantwort, wobei die Filterkoeffizienten des adaptiven komplexen Filters gemäß der komplexen Impulsantwort eingestellt werden. Aus Gründen der Rechenkomplexität und der Konvergenzrate weist die vom DSP-Prozessor erzeugte Impulsantwort eine endliche Bitlänge/Zeitdauer auf, welche der Zahl der Filterkoeffizienten entspricht.

Bei einer weiteren Ausführungsform des aus der EP 1 087 559 A1 bekannten Repeaters sind ein digitales Filter mit Bandpasscharakteristik und eine Einrichtung zur Einstellung der Filterkoeffizienten vorgesehen. Die Einrichtung zur Einstellung der Filterkoeffizienten, der FFT-Prozessor und der DSP-Prozessor sind wie vorstehend beschrieben ausgestaltet. Bei der Anwendung im BST-OFDM System (Band Segmented Transmission Orthogonal Frequency Division Multiplexing) bzw. DVB-T System (Digital Video Broadcast- Terrestrial), bei dem die Amplituden der Träger des CP-Signals (Continual Pilot) bzw. des TMCC Signals (Transmission and Multiplexing Configuration Control) konstant sind, wird die Schätzgenauigkeit der Übertragungsfunktion erhöht, indem eine grobe Schätzung der Übertragungsfunktion anhand des CP-Signals bzw. des TMCC Signals, welches in allen Symbolen des BST-OFDM-Signals enthalten ist, und eine Feinschätzung niittels des in einem bestimmten Symbolintervall übertragenen SP-Signals (Scattered Pilot) vorgenommen wird. Problematisch ist sowohl die durch die digitale Signalverarbeitung eingeführt Verzögerung bzw. Verarbeitungsgeschwindigkeit, wobei auch das Schutzintervall der OFDM-Signale zu berücksichtigen ist, als auch die Erzeugung des Referenzsignals.

Weiterhin ist aus der US-A 4,701,935 ein regenerative HF-Repeater bekannt, welcher zur Regeneration der ursprünglich übertragenen Bits von der Basisstation dient. Zur Echo- und Interferenz- Unterdrückung wird dabei stets das regenerierte Signal einem adaptiven Filter zugeführt, wobei ein Entscheiderschaltkreis erforderlich ist und in allen Fällen der Ausgang des Entscheiderschaltkreises mit dem adaptiven Filter verbunden ist.

Schließlich ist aus der US-A-4,782,525 ein in einem Sprachübertragungsnetzwerk in der Leitung eines 2-Leiter Systems angeordneter Basisband-Repeater bekannt, der in Vorwärts- und RückwärtsRichtung im gleichen Frequenzbereich (Basisband) arbeitet. Insbesondere ist Gegenstand der US-A-4,782,525 ein Vierdraht-Zweidrahtübergang, wobei der Hybrid-Koppler keine ideale Charakteristik aufweist und eine Einkopplung vom Sendesignal in den Empfängereingang des Hybrid auftritt. Dies kann Eigenschwingungen verursachen, wenn die Schleifenverstärkung positiv ist. Das Echo ist dabei ein lokales Echo, verursacht durch die Einkopplung zwischen Sender- und Empfängereingang und der Durchlasspfad weist nur ein Gain-Element jedoch kein Bandfilter auf. Weiterhin wird beim Gegenstand der US-A-4,782,525 ein Decoder benutzt, welcher die Bits im Basisband decodiert, so dass eine Decodierung (Pegel-Vergleich) eines digitalen Basisbandsignals durchgeführt wird. Weiterhin ist sowohl für den Vorwärtszweig als auch den Rückwärtszweig ein separates adaptives Filter vorgesehen, um das Echo zu unterdrücken. Daher muss die Regelschaltung der adaptiven Filter in beide Richtungen derart ausgestaltet sein, dass diese sich nicht gegeneinander beeinflussen.

Wie die vorstehende Würdigung des Standes der Technik aufzeigt, sind Repeater, auch solche mit digitaler Signalverarbeitung, bekannt. Der wesentliche Nachteil der oben stehend beschriebenen digitalen Repeater liegt darin, dass die Rechenkomplexität bzw. die Verarbeitungsgeschwindigkeit sehr groß sein muss, um insbesondere bei der Echokompensation dafür zu sorgen, dass die notwendige Verzögerung nicht die Leistungsfähigkeit zu sehr beeinträchtigt. Obwohl durch die digitale Umsetzung eine deutliche Verbesserung der technischen Parameter im Vergleich zu einer Umsetzung mit konventioneller analoger Technik möglich ist, konnte die Gesamtheit der Einsatzgebiete bzw. Anwendungsfälle als uni- und bidirektionale Hochfrequenzverstärker zum Einsatz in Mobilfunk-Kommunikations- und Datennetzen sowie auch in der Rundfunktechnik von den bekannten Verfahren und Vorrichtungen nicht erfüllt werden. Besonders bedeutsam ist dies, weil sowohl die Nachrichtentechnik-Industrie als auch die Telekommunikations-Industrie als äußerst fortschrittliche, entwicklungsfreudige Industrien anzusehen sind, die sehr schnell Verbesserungen und Vereinfachungen aufgreifen und in die Tat umsetzen.

Der Erfindung liegt gegenüber den bekannten Repeatern die Aufgabe zugrunde, die Struktur des Repeaters derart auszugestalten, dass einerseits die Rechenkomplexität verringert ist, andererseits diese Verringerung nicht auf Kosten der Leistungsfähigkeit bei der Signalfilterung und/oder Unterdrückung der Eigenschwingung geht.

Diese Aufgabe wird, ausgehend von einem Repeater mit einem Uplink-Zweig und Downlink-Zweig, wobei die Kopplung der beiden Repeaterzweige an den Antennen mit Duplex-Filtern erfolgt, gemäß Patentanspruchs 1 dadurch gelöst, dass in den Repeaterzweigen Repeater-Komponenten in folgender Reihenfolge angeordnet sind:
- ein analoger Mischer zur Abwärtsmischung des Eingangssignals,
- ein mit dem analogen Mischer in Verbindung stehender Analog-Digital-Wandler,
- eine an den Analog-Digital-Wandler angeschlossene Echounterdrückung,
- ein mit der Echounterdrückung in Verbindung stehendes Bandpassfilter,
- ein mit dem Bandpassfilter in Verbindung stehender Digital-Analog-Wandler,
- ein mit dem Digital-Analog-Wandler in Verbindung stehender analoger Mischer zur Aufwärtsmischung,
- ein mit dem analogen Mischer in Verbindung stehender Repeaterverstärker und
- ein DSP-Prozessor, welcher über ein FIR-Filter mit der Echounterdrückung, welcher mit einer an das FIR-Filter angeschlossenen Verzögerung und welcher mit dem Bandpassfilter verbunden ist,
und dass zur Unterdrückung der Rückkopplung zwischen Sende- und Empfangsantenne der DSP-Prozessor die Übertragungsfunktion des Rückwärtskanals schätzt, die inverse Übertragungsfunktion berechnet und die FIR-Filterkoeffizienten einstellt, indem der DSP-Prozessor die mittels einem Zwischenspeicher gesammelten Abtastproben von Eingangs- und Ausgangssignal ausliest, um die Korrelation zwischen Eingangs- und Ausgangssignal zu berechnen und die Verzögerungszeit im Rückkopplungszweig und dem FIR-Filter einzustellen und dass zur Unterdrückung externer Störer im Empfangssignal das FIR-Filter mit einem zusätzlichen Eingang in Verbindung steht, welcher den Referenzeingang des unerwünschten Signals darstellt und der DSP-Prozessor die Kreuzkorrelierte zwischen dem Referenzsignal und einem Steuersignal am Ausgang berechnet und nach deren Maßgabe die Verzögerungszeit im Rückkopplungszweig und dem FIR-Filter einstellt, so dass ohne Änderung der Systemkonzeption eine Bandpassfilterung und Unterdrückung der Eigenschwingung oder externer Störer durch Umkonfiguration durchführbar ist.

Das erfindungsgemäße Verfahren weist den Vorteil auf, dass auf überraschend einfache Art und Weise eine Anpassung an verschiedene Systeme, wie GSM, UMTS, Tetra, IS 136 oder IS95 und Anwenderanforderungen, beispielsweise Echokompensation oder Unterdrückung externen Störer, erreicht werden kann. Der Schaltungsaufwand ist trotz der Möglichkeiten der flexiblen Anpassung relativ gering. Weiterhin ist von Vorteil, dass die Signalverarbeitung unter Mehrfachausnutzung vorhandener digitaler Mittel erfolgt, so dass in Verbindung mit der erfindungsgemäßen Struktur eine verbesserte Störungsunterdrückung erzielt wird.

Die Verwerdung von adaptiven FIR-Filter und DSP-Prozessor ermöglicht, dass - zur Berechnung der Korrelation zwischen Eingangs- und Ausgangssignal und Einstellung der Verzögerungszeit im Rückkopplungszweig und des FIR-Filters - die Rechenkomplexität verringert werden kann. Die Gesamtverzögerungszeit der digitalen Signalverarbeitungsvorrichtung ist sowohl im GSM-System als auch für die UMTS-Kanäle relativ gering und liegt unter 7 µsec. Weiterhin ist von besonderem Vorteil, dass zur Unterdrückung externer Störer im Empfangssignal trotz der hohen Selektivität - auch an den Bandgrenzen - der zusätzliche Schaltungsaufwand gering ist.

In Weiterbildung der Erfindung ist, gemäß Patentanspruch 2, der Verstärker schaltbar, wobei als Referenzsignal das bei geschaltetem Verstärker anliegende Eingangssignal benutzt wird und der Repeaterverstärker ein adaptiver rückgekoppelter Verstärker ist.

Diese Weiterbildung der Erfindung weist den Vorteil auf, dass trotz geringem Sicherheitsabstand ein stabiler Betrieb gewährleistet wird. Die Schaltfunktion als solche kann kostengünstig realisiert werden.

Bei einer bevorzugten Ausgestaltung der Erfindung sind, gemäß Patentanspruch 3, Schaltmittel mit FIR-Filter und DSP-Prozessor verbunden, wodurch zwischen Betrieb zur Echokompensation oder zur Unterdrückung von Interferenzen umgeschaltet werden kann.

Diese Ausgestaltung der Erfindung weist den Vorteil auf, dass je nach Anwendung und Anforderung ein benutzergesteuertes Umschalten erfolgen kann.

In Weiterbildung der Erfindung sind, gemäß Patentanspruch 4, Mittel zur digitalen Abwärtsmischung vorgesehen, welche jeweils einen digitalen numerisch gesteuerten Oszillator aufweisen und dass derselbe Oszillator zur Abwärts- und Aufwärtsmischung benutzt wird, wodurch ein Frequenzfehler bei der Abwärtsmischung durch die nachfolgende Aufwärtsmischung kompensiert wird und zwischen den Mitteln zur digitalen Abwärtsmischung und zur digitalen Aufwärtsmischung ist ein adaptiver Vorentzerrer angeordnet, welcher mit einem zusätzlichen Eingang des Repeaters in Verbindung steht.

Diese Weiterbildung der Erfindung weist den Vorteil auf, dass Oszillatoren mit geringerer Frequenzgenauigkeit benutzt und auf überraschend einfache Art und Weise dabei auftretende Frequenzfehler zuverlässig kompensiert werden können.

Vorzugsweise bestehen, gemäß Patentanspruch 5, die Mittel zur digitalen Abwärtsmischung aus mindestens einem Mittel zur Dezimation und nachfolgendem Halbbandfilter und die Mittel zur Aufwärtsmischung aus mindestens einem Mittel zur Integration und nachfolgendem Halbbandfilter.

Durch diese Ausgestaltung der Mittel zur digitalen Abwärts- bzw. Aufwärtsmischung können Aliassignale wirksam unterdrückt werden, wobei die komplexen Basisbandsignale I und Q von der Dezimation bzw. Interpolation nicht beeinflusst sind und eine unveränderte Bandbreite aufweisen. Die Reihenanordnung aus Halbfilter und Dezimationsfilter kann auch mehrfach vorgesehen werden, beispielsweise zweimal Faktor 2, wobei das jeweilige Halbbandfilter die ganzzahligen Vielfachen der Spiegelfrequenzen unterdrücken.

Weiterhin ist, gemäß Patentanspruch 8 vorgesehen, dass zwischen eingangsseitig angeordneten analogen Mischer und Analog-Digital-Wandler ein Tiefpassfilter und zwischen ausgangsseitig angeordneten analogen Mischer und Analog-Digital-Wandler ein weiteres Tiefpassfilter angeordnet ist.

Mit dem eingangsseitigen Tiefpassfilter kann Rauschen unterdrückt werden, welches im anderen Fall in das genutzte Frequenzband gefaltet werden würde und mit dem ausgangsseitigen Tiefpassfilter können die Spiegelfrequenzen der digitalen Signalverarbeitung wirksam unterdrückt werden.

Weitere Vorteile und Einzelheiten lassen sich der nachfolgenden Beschreibung einer bevorzugten Ausführungsform der Erfindung unter Bezugnahme auf die Zeichnung entnehmen. In der Zeichnung zeigt:
- FIG. 1: das Blockschaltbild einher Ausführungsform der erfindungsgemäßen Anordnung für das GSM-System und
- FIG. 2: das Blockschaltbild einer Ausführungsform der erfindungsgemäßen Anordnung für das UMTS-System,
- FIG. 3: das Blockschaltbild einer Ausführungsform zur Echokompensation sowohl im GSM-System als auch im UMTS-System,
- FIG. 4: das Blockschaltbild einer Ausführungsform zur Unterdrückung von Interferenzen sowohl im GSM-System als auch im UMTS-System und
- FIG. 5: den Repeater für die Ausführungsform nach FIG. 2.

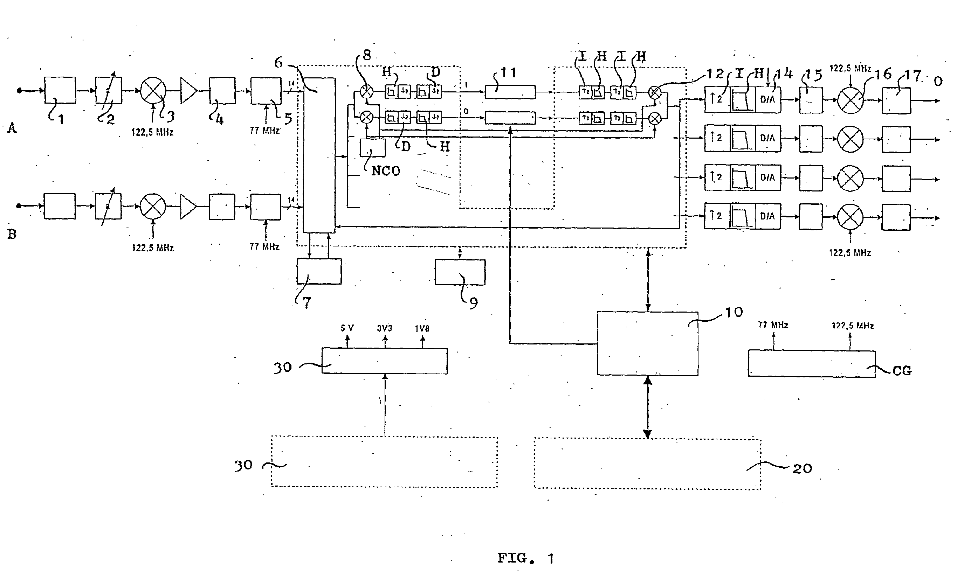

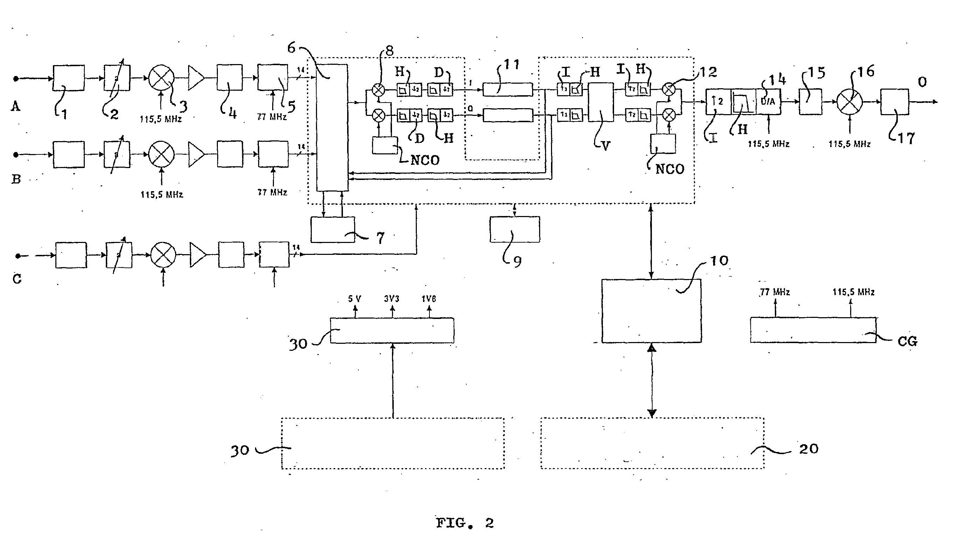

Die in den FIG. 1 und 2 dargestellte erfindungsgemäße digitale Signalverarbeitungsvorrichtung weist folgende Funktionen auf:
- Signalfilterung im Repeater,
- Unterdrückung der am Eingang des Repeaters empfangenen Ausgangssignale,
- Unterdrückung der im Repeater erzeugten Signale und
- Unterdrückung der außerhalb der Repeaters generierten Störungen.

Die digitale Signalverarbeitungsvorrichtung besteht aus einem Empfängermodul, einem Kanalfiltermodul und einem Sendermodul. Das Empfängermodul weist mindestens und in Serie liegend einen analogen Mischer zur Abwärtsmischung und Filterung des Eingangssignals, einen Analog-Digital-Wandler, Mittel zur digitalen Abwärtsmischung und Dezimalfilter auf. Das Sendermodul enthält mindestens und in Serie liegend einen Interpolator, Vorentzerrer, Mittel zur. digitalen Aufwärtsmischung, Digital-Analog-Wandler und einen analogen Mischer zur Aufwärtsmischung.

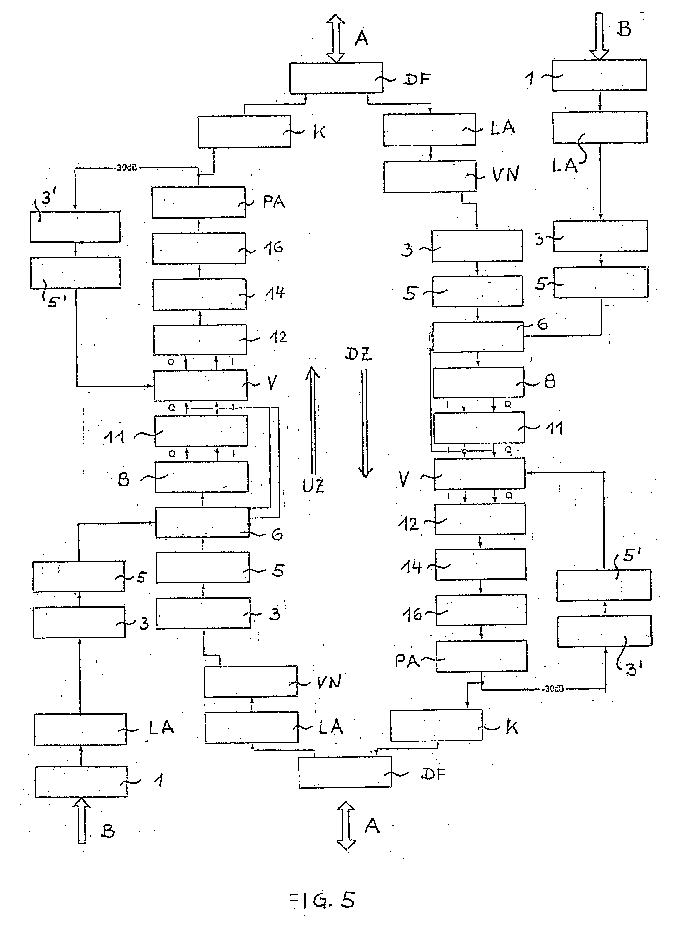

Im folgenden wird anhand der FIG. 1 und FIG. 2 das Blockschaltbild einer Ausführungsform der erfindungsgemäßen Anordnung für das GSM-System und für das UMTS-System im einzelnen erläutert und beschrieben. Die digitale Signalverarbeitungsvorrichtung ist in der Lage bis zu vier GSM Kanäle oder einen UMTS-Block, welcher aus zwei benachbarten UMTS Kanälen besteht, zu verarbeiten. Vier GSM-Segmente können parallel von einem Modul im Uplink-Zweig UZ (siehe FIG. 5) und Downlink-Zweig DZ (siehe FIG. 5) des Repeaters bearbeitet werden. Jedes Segment hat eine Bandbreite von 200 kHz bis 6,25 MHz, so dass eine Gesamtbandbreite von 25 MHz erreicht wird. Das jeweilige Band wird durch das Einstellen der Filterkoeffizienten des Kanalfilters (siehe 11 in FIG. 1 und FIG. 2) gewählt, wobei die Filterkoeffizienten off-line berechnet werden (siehe 10, 20 in FIG. 1 und FIG. 2). Für alle vier Segmente ist ein einzige analoge Eingangsschaltung (siehe FIG. 1) vorgesehen.

Die Trägerfrequenz des empfangenen analogen Signals liegt im nachfolgend anhand FIG. 1 beschriebenen GSM-System bei 140 MHz. Für diesen Bereich stehen handelsübliche SAW-Filter 1 und 17 (Oberflächenwellenfilter) mit einer Gruppenlaufzeit von 1,17µs bei einer Toleranzbandbreite zwischen 17nsec und 50nsec und einer Dämpfung von mindestens 50 dB in der Regel 60 dB zur Unterdrückung der Spiegelfrequenz zur Verfügung. Vorzugsweise ist zwischen dem SAW-Filter 1 und dem Mischer 3 der Eingangsschaltung ein einstellbarer Verstärker 2 angeordnet, um zu verhindern, dass der Analog-Digital-Wandler 5 übersteuert. Der einstellbare Verstärker 2 wird nach Maßgabe eines Detektors, angeordnet am Verstärkereingang, innerhalb maximal 20 µsec angesteuert. Der analoge Mischer 3 darf keine Interferenz in Bezug auf die Eingangssignale erzeugen, so dass vorzugsweise ein doppelt symmetrierter Mischer benutzt wird. Mittels eines vor dem Analog-Digital-Wandler 5 angeordneten Tiefpassfilters 4 wird Rauschen unterdrückt, welches im anderen Fall in das genutzte Frequenzband zwischen 127,5 MHz und 152,5 MHz gefaltet werden würde.

Zur Analog-Digital-Wandlung kann beispielsweise ein Analog-Digital-Wandler 5 mit einer maximalen Wandlerrate von 80 Mbit/s und einer Auflösung von 14 Bit benutzt werden. Das SNR-Verhältnis liegt für ein Signal mit 30,5 MHz und -1dBFS bei der maximalen Wandlerrate bei 73,5 dB. Zur Unterdrückung des bei dieser Dimensionierung zwischen 47 MHz und 72 MHz liegenden Aliasbands wird vorzugsweise die Abtastfrequenz des Analog-Digital-Wandlers 5 bei 77 MHz gewählt, wodurch die Benutzung eines weniger aufwendigen Tiefpassfilters 4 mit einer Grenzfrequenz von 33 MHz ermöglicht wird.

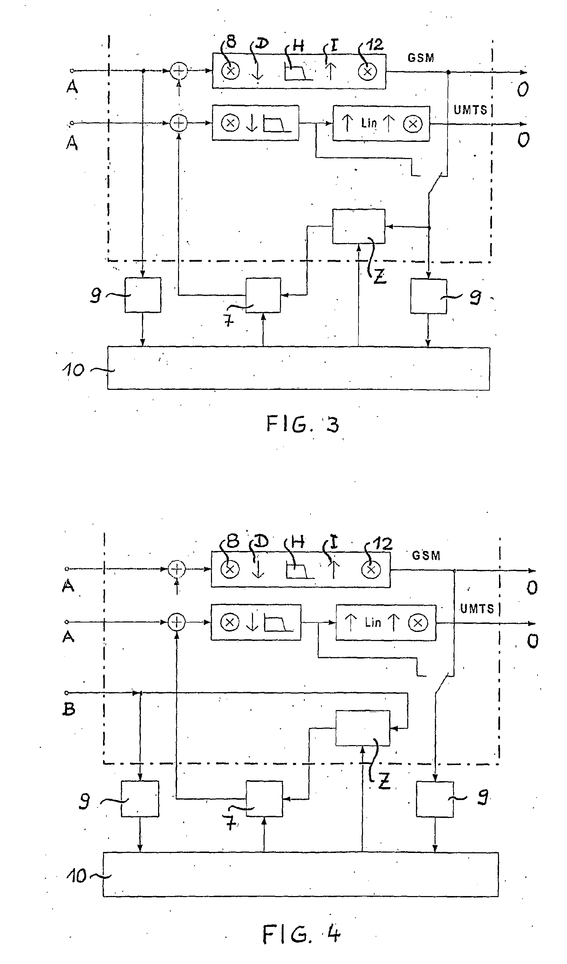

Die Echounterdrückung 6 wird beispielsweise bei GSM, UMTS und IS95 eingesetzt; Einzelheiten sind in FIG. 3 dargestellt. Die Rückkopplung zwischen Sende- und Empfangsantenne kann durch ein FIR-Filter 7 unterdrückt werden. Erfindungsgemäß wird die Übertragungsfunktion des Rückwärtskanals geschätzt, die inverse Übertragungsfunktion berechnet und die FIR-Filterkoeffizienten eingestellt. Ein DSP-Prozessor 10 liest die mittels Zwischenspeicher 9 gesammelten Abtastproben von Eingangs- und Ausgangssignal A, O aus, um die Korrelation zwischen Eingangs- und Ausgangssignal A, O zu berechnen und stellt die Verzögerungszeit (in Z) im Rückkopplungszweig und des FIR-Filters 7 ein. Um das FIR-Filter 7 zu realisieren, werden beispielsweise zwei Gray-Chips benötigt. Im GSM-System kann die Summe der 4-Segment Ausgangssignale verwendet werden, um das Steuersignal zu erzeugen.

Im UMTS-System wird, wie aus FIG.. 3 ersichtlich, die I-Komponente und Q-Komponente vor dem Linearisierungsnetzwerk Lin bzw. V (siehe FIG. 2) benutzt, um das Steuersignal zu erzeugen. Das vorentzerrte Signal muss nicht verwendet werden.

Entsprechend der gewählten FIR-Filterstruktur können auch mehrere Rückkopplungen unterdrückt werden, vorausgesetzt, dass die Verzögerung der Rückkopplungssignale kleiner ist als die Rechenzeit des FIR-Filters. Vorzugsweise wird ein adaptives Filter benutzt.

Zur Unterdrückung externer Störer im Empfangssignal weist der digitale Repeater, insbesondere für das FIR-Filter 7 einen zusätzlichen Eingang B auf, wie dies in FIG. 4 für das GSM-System bzw. UMTS-System dargestellt ist. Dieser Eingang B stellt den Referenzeingang des unerwünschten Signals dar. Der DSP-Prozessor 10 berechnet die Kreuzkorrelierte zwischen dem Referenzsignal B und dem Steuersignal am Ausgang O und nach deren Maßgabe wird die Verzögerung (in Z) im Rückkopplungszweig und FIR-Filter 7 eingestellt.

Erfindungsgemäß kann die vorgenannte Schaltungsstruktur sowohl zur Echokompensation als auch zur Unterdrückung von Interferenzen eingesetzt werden, wie dies aus dem Vergleich von FIG. 3 und FIG. 4 hervorgeht.

Der Echokompensation bzw. Unterdrückung externer Störer sind Mittel 8 zur digitalen Abwärtsmischung nachgeschaltet, welche das Eingangssignal in vier Segmente aufteilen. Hierbei werden vier separate Mischer 8 benutzt, welche jeweils das Signal in die komplexe äquivalente Basisbandlage umsetzen. Für jedes Segment erzeugt ein digitaler numerisch gesteuerter Oszillator NCO für die Mischer 8 ein inphase Quadraturoszillatorsignal, wobei der Oszillator NCO zum Aufwärts- und Abwärtsmischen derselbe ist. Das Oszillatorsteuersignal ist 14 Bit lang und der Oszillator weist eine Taktfrequenz von 77 MHz auf. Dementsprechend ist die Schrittweite zur Veränderung der Oszillatorausgangsfrequenz 4.699,707 Hz und die Mittenfrequenz der Kanalfilter liegt bei +/- 2.350 Hz. Um das gewünschte Signal auszuwählen, kann der Oszillator NCO von ungefähr 5 MHz bis 30 MHz eingestellt werden. Für das Frequenzsprungverfahren werden Sprungfolge und Zeitsteuerinformation vom Repeater Controller 20 erzeugt. Um den Frequenzoffset zu reduzieren, kann die Auflösung des Oszillators NCO größer gemacht werden, dadurch wird jedoch der Schaltungsaufwand für den Oszillator NCO größer. Da erfindungsgemäß derselbe Oszillator NCO zur Abwärts- und Aufwärtsmischung benutzt wird, wird ein Frequenzfehler bei der Abwärtsmischung durch die nachfolgende Aufwärtsmischung kompensiert.

Am Ausgang der Mittel 8 zur digitalen Abwärtsmischung liegen die I-Komponente und Q-Komponente im komplexen Basisband mit einer Abtastrate von 77 Mbit/s und der Hälfte der Segment-Bandbreite an. Im Ausführungsbeispiels ist die Segment-Bandbreite max. 6,25 MHz. Um die Datenrate zu reduzieren und Aliasing zu vermeiden, sind Dezimationsfilter nachgeordnet, welche in Reihe ein Halbbandfilter H, Mittel D zur Dezimation um den Faktor 2, ein Halbbandfilter H und wieder Mittel D zur Dezimation um den Faktor 2 aufweisen. Im einzelnen erfolgt die Dezimation auf eine Datenrate 19,25 Mbit/s (¼ der Datenrate von 77 Mbit/s), wobei die Basisbandsignale I und Q von der Dezimation nicht beeinflusst sind und weiterhin eine Bandbreite von 3,125 MHz aufweisen. Bei der Dimensionierung der Halbbandfilter H sind die Spiegelfrequenzen nahe 19,25 MHz, 57,75 MHz für das zweite Halbbandfilter H bzw. 38,5 MHz, 77 MHz für das erste Halbbandfilter H besonders zu berücksichtigen, da sonst Signale mit einem ganzzahligen Vielfachen von 19,25 MHz als Aliassignal am Dezimationsausgang auftreten würden. Mit einer Vergrößerung eines der Segmente wird dies noch kritischer.

Beim Ausführungsbeispiel mit vier GSM-Segmenten wird als Bandpassfilter/Kanalfilter 11 ein 128-stelliges FIR-Filter mit linearer Phase benutzt, welches eine Abtastrate von 19,25 Mbit/s aufweist. Die Filterkoeffizienten werden offline (in 10, 20) berechnet und sind für die I-Komponente und Q-Komponente identisch. Durch Setzen der Filterkoeffizienten ist die Segment-Bandbreite bestimmt und im Ausführungsbeispiel liegt die Gruppenverzögerung des Kanalfilters 11 bei ca. 2,9µsec.

Das nachgeordnete Sendermodul enthält zum Rückgängigmachen der Dezimation am Eingang den Interpolator, welcher wiederum in Reihe Mittel I zur Interpolation um den Faktor 2, ein Halbbandfilter H, wieder Mittel I zur Interpolation um den Faktor 2 und ein Halbbandfilter H aufweist, d.h. Gesamtinterpolation um den Faktor 4, wobei die Abtastrate am Ausgang des Interpolators wiederum 77 Mbit/s ist. Die nachgeschalteten Mittel 12 zur digitalen Aufwärtsmischung entsprechen einem digitalen I/Q- Modulator. Die komplexen Basisbandsignale I und Q werden frequenzumgesetzt und zu einem realen Bandpasssignal verknüpft, welches im Frequenzband zwischen 5. MHz und 30 MHz liegt. Für die nachfolgende D/A-Wandlung wird wieder ein Analog-Digital-Wandler 14 bei einer Wandlerrate von 77Mbit/s und einer Auflösung von 14 Bit betrieben, wobei für jedes Segment ein Analog-Digital-Wandler 14 vorgesehen ist. Schließlich weist das Sendermodul einen analogen Mischer 16 zur Aufwärtsmischung auf.

Im einzelnen ist ein mit dem Digital-Analog-Wandler 14 verbundenes Tiefpassfilter 15 vorgesehen, um die Spiegelfrequenzen der digitalen Signalverarbeitung zu unterdrücken. Die 1dB-Eckfrequenz liegt im Ausführungsbeispiel bei ca. 33 MHz. Der Oszillator (der Taktquelle CG mit 77 MHz bzw. 122,5 MHz) entspricht dem im Empfängermodul, wodurch das Phasenrauschen dieses Oszillators kompensiert wird. Um das vom analogen Mischer 16 stammende Spiegelsignal zu unterdrücken kann ein SAW Bandpassfilter 17 vorgesehen werden, welches dem im Empfängermodul entspricht. Das Ausgangsignal O des Sendermoduls liegt beim beschriebenen Ausführungsbeispiel bei 140 MHz und weist eine Bandbreite von 25 MHz auf. Für die vier GSM-Segmente bzw. für die vier Mischer wird derselbe Oszillator benutzt.

Die Gesamtverzögerungszeit der aus Empfängermodul, Kanalfiltermodul und Sendermodul bestehenden digitalen Signalverarbeitungsvorrichtung beträgt für einen 200 KHz-Kanal im GSM-System 6,46 µsec bzw. für ein 6,25 MHz-Segment 6,42 µsec. Diese Gesamtverzögerungszeit wird im wesentlichen von dem SA W-Bandpassfilter 1, 17 im Empfänger- bzw. Sendermodul mit 1,17 µsec und von dem Kanalfilter 11 mit 2,89 µsec (bzw. 2,85 µsec für das Segment) bestimmt.

Um die Module zu steuern, ist mit dem Repeater Controller 20 der DSP-Prozessor 10 verbunden. Die einzelnen Funktionen des DSP-Prozessors 10 sind: die Berechnung und Einstellung der notwendigen Verzögerung und der Filterkoeffizienten für das FIR-Filter 7, die Einstellung der Kanalfilter 11 sowie die Überwachung der Module. Das Oszillatorsignal für die analogen Mischer 3, 16 und das Taktsignal für die digitale Signalverarbeitung wird mittels im Repeater angeordneten Taktgeber CG erzeugt. Weiterhin weist der Repeater eine Stromversorgung 30 mit 5V Gleichspannung für die analogen Schaltkreise und 3,3V Gleichspannung für die digitalen Schaltkreise auf.

Das Blockschaltbild einer Ausführungsform der erfindungsgemäßen Anordnung für das UMTS-System wird nachfolgend anhand FIG. 2 näher erläutert. Wie bereits vorstehend ausgeführt, ist die digitale Signalverarbeitungsvorrichtung in der Lage einen UMTS-Block, welcher aus zwei benachbarten UMTS Kanälen besteht, zu verarbeiten. Da jeder UMTS Kanal eine Bandbreite von 5 MHz hat, ist empfangsseitig eine Bandbreite von 10 MHz zu verarbeiten. Die zwei UMTS Kanäle werden dabei nicht voneinander unterschieden und als ein Signal behandelt, wobei für dieses Signal eine Kanalfilterung und eine Vorentzerrung durchgeführt wird.

Das Empfängermodul erwartet die zwei Kanäle zueinander benachbart bei 140 MHz. Wie vorstehend für das GSM-System (siehe FIG. 1) beschrieben, stehen für die Eingangsschaltung handelsübliche SAW-Filter 1 nun mit einer Bandbreite von 10 MHz und einer Gruppenverzögerungszeit von 1,92 µsec zur Verfügung. Der Mischer 3 im Empfängermodul wird mit einer Oszillatorfrequenz von 115,5 MHz betrieben, wodurch das 10 MHz breite Empfangsband nach 24,5 MHz verschoben wird. Der Analog-Digital-Wandler 5 entspricht dem oben stehend für das GSM-System beschriebenen und wird ebenfalls mit 77 MHz betrieben. Entsprechendes gilt für die Echokompensation (siehe FIG. 1 und FIG. 3).

Der in den nachgeschalteten Mittel zur digitalen Abwärtsmischung angeordnete digitale numerisch gesteuerte Oszillator NCO für die beiden digitalen Mischer 8 zur Umsetzung des Signals in die komplexe Basisbandlage wird mit 77 MHz und 14 Bit breiter Phasensteuerung betrieben, woraus eine Oszillator-Schrittweite von 7.049,56 Hz resultiert, und weist ein Oszillatorsignal mit 24,5 MHz auf.

Am Ausgang der Mittel 8 zur digitalen Abwärtsmischung sind wiederum Dezimationsfilter (mit H, D) nachgeordnet, welche denen für das GSM-System beschriebenen entsprechen. Die im,Basisband liegenden I- und Q-Kompenente sind von der Dezimation nicht betroffen und weisen weiterhin eine Bandbreite von 5 MHz auf.

Auch die Bandpassfilter/Kanalfilter 11 entsprechen den oben stehenden für das GSM-System beschrieben, wobei diese nun für die zwei UMTS Kanäle optimiert sind.

Das nachgeordnete Sendermodul enthält zum Rückgängigmachen der Dezimation am Eingang einen Interpolator, welcher die Interpolation in zwei Schritten durchführt: die erste Interpolation um den Faktor 3 (wodurch die Abtastfrequenz von 19,25 MHz nach 57,75 MHz verschoben wird) vor der Vorentzerrung V und die zweite Interpolation um den Faktor 2 nach der Vorentzerrung V. Wiederum sind in Reihe angeordnete Interpolationsfilter H vorgesehen, um die Spiegelfrequenzen zu unterdrücken. Durch den erfindungsgemäß vor der Vorentzerrung angeordneten ersten Interpolatorteil wird in Verbindung mit der Vorentzerrung zusätzliche Bandbreite beschaffen. Vorzugsweise wird dementsprechend die Bandbreite der I-und Q-Kmponente von 10 MHz auf 30 MHz vergrößert. Der nachgeschaltete zweite Interpolatorteil verschiebt die Abtastfrequenz nach 115,5 MHz, wobei mittels Interpolationsfilter H wieder die unerwünschten Spiegelfrequenzen unterdrückt werden.

Die wiederum nachgeschalteten Mittel 12 zur digitalen Aufwärtsmischung verknüpft die I- und Q-Komponente zu einem 40 MHz breiten Signal mit einer Mittenfrequenz von 24,5 MHz. Der digitale numerisch gesteuerte Oszillator NCO wird bei 115,5 MHz betrieben, welcher zwei Oszillatorsignale mit einer um das 1 ½ -fachen höheren Frequenz als beim entsprechenden digitalen numerisch gesteuerten Oszillator NCO für die Abwärtsmischung.

Schließlich gelten hinsichtlich Digital-Analog-Wandler 14, analogen Aufwäntsmischer 16 und SAW-Bandpassfilter 17 im Sendermodul die entsprechenden Ausführungen beim oben stehend beschriebenen GSM-System. Die Gesamtverzögerungszeit der aus Empfängermodul, Kanalfiltermodul und Sendermodul bestehenden digitalen Signalverarbeitungsvorrichtung hat sich im Vergleich zum GSM-System geringfügig erhöht und beträgt für einen UMTS-Kanal 6,96 µsec bzw. für zwei UMTS-Kanäle 6,92 µsec. Diese Gesamtverzögerungszeit wird im wesentlichen von dem SAW-Bandpassfilter im Empfänger- bzw. Sendermodul mit 1,92 µsec bzw. 1,11 µsec und von dem Kanalfilter mit 2,59 µsec (bzw. 2,55 µsec für zwei UMTS-Kanäle) bestimmt.

Hinsichtlich DSP-Prozessor 10 und dessen Funktionen, Erzeugung von Systemtakt (in CG) und Oszillatorsignale bzw. Stromversorgung (mit 30) kann auf oben stehende Beschreibung für das GSM-System verwiesen werden. Einzelheiten des Repeaters und die Verfahrensabfolge ist aus FIG. 5 ersichtlich und wird zusammenfassend unter Bezugnahme auf die jeweiligen Komponenten kurz erläutert.

Am Eingang bzw. Ausgang des Uplink-Zweig UZ und Downlink-Zweig DZ des Repeaters ist jeweils ein Duplex-Filter DF angeordnet, welches sowohl mit einem Verstärker LA als auch mit einem Kombinationsnetzwerk K verbunden ist. Zwischen Verstärker LA des Uplink-Zweigs UZ bzw. Downlink-Zweig DZ und analogen Mischer 3 zur Abwärtsmischung des Eingangssignals ist ein Verteilernetzwerk VN angeordnet. An das Kombinationsnetzwerk K des Downlink-Zweigs DZ bzw. des Uplink-Zweigs UZ ist als Repeaterverstärker der adaptive rückgekoppelte Verstärker PA (Rückkopplungsweg über 3' und 5') angeschlossen, dessen Eingang mit dem Ausgang des analogen Mischers 16 verbunden ist.

Die erfindungsgemäße digitale Signalverarbeitung kann auch im Tetra-System oder IS 136-System oder IS 95-System angewandt werden.

Die Kosten der digitalen Signalverarbeitung werden durch die Kosten für die Analog-Digital-Wandler bzw. Digital-Analog-Wandler sowie die Mittel zur Aufwärts- bzw. Abwärtsmischung mitbestimmt. Für den Einsatz bei verschiedenen Systemen mit jeweils unterschiedlicher Kanalzahl ist vorzugsweise die Modulbauweise vorgesehen.

Neben den vorstehend beschriebenen Modulen kann alternativ das Empfangsmodul die SAW-Bandpassfilterung, einstellbare Verstärkung, analoge Abwärtsmischung und Analog-Digital-Wandlung aufweisen. Weiterhin kann ein Mainboard mit Unterdrückung, digitaler Abwärtsmischung, Dezimation, Kanalfilterung, Interpolation, Linearisierung, digitale Aufwärtsmischung, Modulsteuerung, Takterzeugung und Stromversorgung vorgesehen werden. Das Sendermodul weist in diesem Fall die Digital-Analog-Wandlung, die analoge Aufwärtsmischung und die SAW-Bandpassfilterung auf. Für das GSM-System, UMTS-System und das IS 95-System wird ein Mainboard benötigt, welches bis zu drei Empfängermodule und vier Sendermodule steuern kann. Bei den vorstehenden Systeme werden dabei jeweils unterschiedliche Typen von Empfänger- und Sendermodule benötigt.

Im Gegensatz zu den bekannten Repeater mit einer digitalen Signalverarbeitungsvorrichtung kann der erfindungsgemäße digitale Repeater ohne Änderung der Systemkonzeption bei verschiedenen Systemen eingesetzt werden. Besonders vorteilhaft ist, dass lediglich eine Umkonfiguration in den Modulen beim Anwender erforderlich ist, welcher zwischen der Betriebsweise umschalten kann, so dass der Einsatz entsprechend anwenderspezifischer Anforderungen über verschiedene Systeme hinweg gewährleistet ist.

Im Vergleich zum bekannten Stand der Technik erfordert die erfindungsgemäße Anordnung keine parallele Ausführung von Systemteilen und erlaubt mit überraschend geringem Aufwand vielfältige Einsatzmöglichkeiten, einschließlich der Möglichkeit zum Nachrüsten in bestehende Systeme sowie die flexible und kostengünstige Ausgestaltung.

Alle dargestellten und beschriebenen Ausführungsmöglichkeiten, sowie alle in der Beschreibung und/oder der Zeichnung offenbarten neuen Einzelmerkmale und ihre Kombination untereinander, sind erfindungswesentlich. Beispielsweise kann anstelle der SAW-Bandfilter ein digitales Filter vorgesehen werden u.a.

## Patentansprüche

1. Repeater mit einem Uplink-Zweig (UZ) und Downlink-Zweig (DZ), wobei die Kopplung der beiden Repeaterzweige (UZ, DZ) an den Antennen mit Duplex-Filtern (DF) erfolgt und in den Repeaterzweigen (UZ, DZ) Repeater-Komponenten in folgender Reihenfolge angeordnet sind:
• ein analoger Mischer (3) zur Abwärtsmischung des Eingangssignals (A, B, C),
• ein mit dem analogen Mischer (3) in Verbindung stehender Analog-Digital-Wandler (5),
• eine an den Analog-Digital-Wandler (5) angeschlossene Echounterdrückung (6),
• ein mit der Echounterdrückung (6) in Verbindung stehendes Bandpassfilter (11),
• ein mit dem Bandpassfilter (11) in Verbindung stehender Digital-Analog-Wandler (14),
• ein mit dem Digital-Analog-Wandler (14) in Verbindung stehender analoger Mischer (16) zur Aufwärtsmischung,
• ein mit dem analogen Mischer (16) in Verbindung stehender Repeaterverstärker (PA) und
• ein DSP-Prozessor (10), welcher über ein FIR-Filter (7) mit der Echounterdrückung (6), welcher mit einer an das FIR-Filter (7) angeschlossenen Verzögerung (Z) und welcher mit dem Bandpassfilter (11) verbunden ist,
und dass zur Unterdrückung der Rückkopplung zwischen Sende- und Empfangsantenne der DSP-Prozessor (10) die Übertragungsfunktion des Rückwärtskanals schätzt, die inverse Übertragungsfunktion berechnet und die FIR-Filterkoeffizienten einstellt, indem der DSP-Prozessor (10) die mittels einem Zwischenspeicher (9) gesammelten Abtastproben von Eingangs- und Ausgangssignal (A, O) ausliest, um die Korrelation zwischen Eingangs- und Ausgangssignal (A, O) zu berechnen und die Verzögerungszeit (Z) im Rückkopplungszweig und dem FIR-Filter (7) einzustellen und dass zur Unterdrückung externer Störer im Empfangssignal das FIR-Filter (7) mit einem zusätzlichen Eingang (B) in Verbindung steht, welcher den Referenzeingang des unerwünschten Signals darstellt und der DSP-Prozessor (10) die Kreuzkorrelierte zwischen dem Referenzsignal und einem Steuersignal am Ausgang berechnet und nach deren Maßgabe die Verzögerungszeit (Z) im Rückkopplungszweig und dem FIR-Filter (7) einstellt, so dass ohne Änderung der Systemkonzeption eine Bandpassfilterung und Unterdrückung der Eigenschwingung oder externer Störer durch Umkonfiguration durchführbar ist.

2. Repeater nach Anspruch 1, **dadurch gekennzeichnet, dass** der Verstärker (PA) schaltbar ist, dass als Referenzsignal das bei geschaltetem Verstärker (PA) anliegende Eingangssignal benutzt wird und dass der Repeaterverstärker (PA) ein adaptiver rückgekoppelter Verstärker ist.

3. Repeater nach Anspruch 1, **dadurch gekennzeichnet, dass** Schaltmittel mit FIR-Filter (7) und DSP-Prozessor (10) verbunden sind, wodurch zwischen Betrieb zur Echokompensation oder zur Unterdrückung von Interferenzen umgeschaltet werden kann.

4. Repeater nach Anspruch 1, **dadurch gekennzeichnet, dass** Mittel zur digitalen Abwärtsmischung (8, D) vorgesehen sind, welche jeweils einen digitalen numerisch gesteuerten Oszillator (NCO) aufweisen und dass derselbe Oszillator (NCO) zur digitalen Aufwärtsmischung (I, 12) benutzt wird, wodurch ein Frequenzfehler bei der Abwärtsmischung (8, D) durch die nachfolgende Aufwärtsmischung (I, 12) kompensiert wird und dass zwischen den Mitteln zur digitalen Abwärtsmischung (8, D) und zur digitalen Aufwärtsmischung (I, 12) ein adaptiver Vorentzerrer (V) angeordnet ist, welcher mit einem zusätzlichen Eingang (C) des Repeaters in Verbindung steht.

5. Repeater nach Anspruch 4, **dadurch gekennzeichnet, dass** die Mittel zur digitalen Abwärtsmischung (8, D) aus mindestens einem Mittel zur Dezimation (D) und nachfolgendem Halbbandfilter (H) und die Mittel zur Aufwärtsmischung (I, 12) aus mindestens einem Mittel zur Integration (I) und nachfolgendem Halbbandfilter (H) bestehen.

6. Repeater nach Anspruch 1, **dadurch gekennzeichnet, dass** das Bandpassfilter (11) als Kanalfilter ein mehrstelliges FIR-Filter mit linearer Phase ist, bei dem die Filterkoeffizienten offline und derart berechnet (10, 20) werden, dass diese für die I-Komponente und Q-Komponente identisch sind.

7. Repeater nach Anspruch 1, **dadurch gekennzeichnet, dass** der eingangsseitig angeordnete analoge Mischer (3) über einen einstellbaren Verstärker (2) mit einem diesem (2) vorgeordneten Oberflächenfilter (1) in Verbindung steht, dass der ausgangsseitig angeordnete analoge Mischer (16) mit einem nachfolgend angeordneten Oberflächenwellenfilter (17) verbunden ist und dass als analoge Mischer (3, 16) ein doppelt symmetrierter Mischer benutzt wird.

8. Repeater nach Anspruch 1, **dadurch gekennzeichnet, dass** zwischen eingangsseitig angeordneten analogen Mischer (3) und Analog-Digital-Wandler (5) ein Tiefpassfilter (4) und zwischen ausgangsseitig angeordneten analogen Mischer (16) und Analog-Digital-Wandler (14) ein weiteres Tiefpassfilter (15) angeordnet ist.

9. Repeater nach Anspruch 1, **dadurch gekennzeichnet, dass** zur Steuerung der Repeater-Komponenten mit dem DSP-Prozessor (10) ein Repeater Controller (20) verbunden ist.

10. Repeater nach Anspruch 1, **dadurch gekennzeichnet, dass** das Duplex-Filter (DF) sowohl mit einem Verstärker (LA) als auch mit einem Kombinationsnetzwerk (K) verbunden ist.

11. Repeater nach Anspruch 1 und 10, **dadurch gekennzeichnet, dass** zwischen Verstärker (LA) der beiden Repeaterzweige (UZ, DZ) und analogem Mischer (3) zur Abwärtsmischung des Eingangssignals ein Verteilernetzwerk (VN) angeordnet ist.

12. Repeater nach Anspruch 1 und 10, **dadurch gekennzeichnet, dass** an das Kombinationsnetzwerk (K) der beiden Repeaterzweige (UZ, DZ) als Repeaterverstärker ein adaptiver rückgekoppelter Verstärker (PA) (Rückkopplungsweg über 3' und 5') angeschlossen ist, dessen Eingang mit dem Ausgang des analogen Mischers (16) verbunden ist.

13. Repeater nach Anspruch 1, **dadurch gekennzeichnet, dass** zwischen Bandpassfilter (11) und Digital-Analog-Wandler (14) ein adaptiver Entzerrer (V) angeordnet ist.

## Claims

1. A repeater having an uplink-path (UZ) and a downlink-path (DZ), both of said up-link and said down-link path (UZ, DZ) being coupled to antennas via a duplex filter (DF) and whereas repeater-components are arranged in said uplink-path (UZ) and downlink-path (DZ) in following order:
• an analog mixer (3) for down conversion of an input signal (A, B, C),
• an analog-to-digital converter (5) communicating with said analog mixer (3),
• an echo cancellation circuit (6) connected to said analog-to-digital converter (5),
• a band pass filter (11) communicating with said echo cancellation circuit (6),
• a digital-to-analog converter (14) communicating with said band pass filter (11),
• an analog mixer (16) for up-conversion, said analog mixer (16) communicating with said digital-to-analog converter (14),
• a repeater amplifier (PA) communicating with said analog mixer (16) and
• a DSP processor (10) connected via a FIR filter (7) to said echo cancellation circuit (6), said DSP processor (10) connected to said band pass filter (11) as well to a delay circuit (Z) said delay circuit (Z) connected to said FIR filter (7),
and wherein for suppressing feedback between transmit and receive antenna said DSP processor (10) estimates a transfer function of a feedback path, computes an inverse transfer function and sets said FIR filter coefficients said DSP processor (10) determines said FIR filter coefficients by reading out of scanning samples of input and output signal (A, 0) collected in a buffer (9) for computing correlation between input and output signal (A, 0) and in addition determining the delay time (Z) in the feedback path and in said FIR filter (7) and wherein for suppressing of external interferers in the received signal said FIR adaptive filter (7) is connected to an additional input (B), which represents the reference input of the unwanted signal, and that said DSP processor (10) computes the cross-correlation between the reference signal and a control signal at the exit and in accordance with their condition adjusts the delay (Z) in the feedback path and said FIR filter (7) and thus without amending the system design by reconfiguration a band pass filtering as well as suppressing of self-oscillation or external interferer can be performed.

2. The repeater of claim 1, wherein said repeater amplifier (PA) is switchable wherein as the reference signal the input signal to the switched off amplifier (PA) is used and wherein said repeater amplifier (PA) is an adaptive feedback coupled amplifier.

3. The repeater of claim 1, further comprising switching circuitry communicating with said FIR filter (7) and said DSP processor (10) to switch between an echo compensation mode and a suppression of interference mode.

4. The repeater of claim 1, further comprising a digital down-conversion circuit (8, D) comprising a digital numerically controlled oscillator (NCO) and wherein said oscillator (NCO) is used for digital up-conversion (I, 12) thus a possible frequency error generated by digital down-conversion (8, D) will be compensated by following up-conversion (I, 12) and wherein an adaptive equalizer (V) communicating with an additional input (C) of said repeater is arranged between said means for digital down-conversion (8, D) and for digital up-conversion (I, 12).

5. The repeater of claim 4, wherein said means for digital down-conversion (8, D) comprises at least a mean for decimation (D) following a half-band filter (H) and said means for digital up-conversion (I, 12) comprises at least a mean for integration (I) following a half-band filter (H).

6. The repeater of claim 1, wherein said bandpass filter (11) as channel filter using a multi-tap FIR filter with linear phase, wherein the filter coefficients are computed off-line and in such a way (10, 20) that they are identical for I-component and Q-component.

7. The repeater of claim 1, wherein said analog mixer (3) arranged at the input side communicating with a surface acoustic wave filter (1) via an adjustable amplifier (2), wherein said analog mixer (16) arranged at the output side is connected to a surface acoustic wave filter (17) and wherein said analog mixers (3, 16) are double symmetrized mixers.

8. The repeater of claim 1, further comprising a low-pass filter (4) placed between said analog mixer (3) arranged at the input side and said analog-to-digital converter (5) and further comprising a low-pass filter (15) placed between said analog mixer (16) arranged at the output side and said digital-to-analog converter (14).

9. The repeater of claim 1, further comprising a repeater controller (20) said repeater controller (20) is connected to said DSP processor (10) in order to control the repeater modules.

10. The repeater of claim 1, further comprising a duplex filter (DF) connected to an amplifier (LA) as well to a combining network (K).

11. The repeater of claim 1 and 10, further comprising a splitter network (VN) said splitter network (VN) is disposed between said amplifier (LA) of the uplink and downlink path (UZ, DZ) and said analog mixer 3 for down conversion of the input signal.

12. The repeater of claim 1 and 10, wherein an adaptive feedback coupled amplified (PA) (feedback coupling via 3' and 5') is connected to said combining network (K) of the uplink and downlink path (UZ, DZ) as repeater amplifier and its input is connected to the output of the analog mixer (16).

13. The repeater of claim 1, further comprising an adaptive equalizer (V) placed between said bandpass filter (11) and said digital-to-analog converter (14).

## Revendications

1. Un répéteur comprenant une branche répéteur de liaison montante (UZ) et descendante branche (DZ), le couplage de deux répéteurs branches (UZ, DZ) pour les antennes avec duplex filtres adaptatifs (DF) est réalisée et dans les répéteurs branches (UZ, DZ) les composants de le répéteur sont disposés dans l'ordre suivant:
• Un mélangeur analogique (3) pour la conversion par abaissement du signal d'entrée (À, B, C),
• Une convertisseur d'analogique en numérique (5) connecté avec le mélangeur analogique (3),
• Une d'annulation de l'écho (6) connecté avec le convertisseur d'analogique en numérique (5),
• Un filtre passe-bande (11) être en liaison avec la d'annulation de l'écho (6),
• un convertisseur numérique-analogique (14) être en liaison avec le filtre passe-bande (11),
• Un mélangeur analogique (16) pour une conversion élevée en fréquence être en liaison avec le mélangeur analogique (16),
• Un amplificateur de répéteur (PA) être en liaison avec le mélangeur analogique (16) et
• Un processeur DSP (10) étant connectée à la d'annulation de l'écho (6) par un filtre FIR (7) et étant connectée à un circuit de retardement (Z) relié à le filtre FIR (7) et étant connectée avec la filtre passe-bande (11), et en ce que pour supprimer la rétroaction entre l'émetteur et l'antenne de réception le processeur DSP (10) estimée la fonction de transfert de la voie de retour, calcule la fonction de transfert inverse et établis les coefficients du filtre FIR, en le processeur DSP (10) au moyen de verrouillage (9), pour calculer la corrélation entre du signal d'entrée et de sortie (A, O) et d'ajuster le temps de retard (T) dans la branche de rétroaction et du filtre FIR, lit des échantillons prélevés du signal d'entrée et de sortie (A, O) et que pour supprimer du brouilleur externe dans le signal reçu, le filtre FIR (7) avec une entrée supplémentaire (B) est connecté, qui est l'entrée du signal indésirable de référence, et le processeur DSP (10) calcule la corrélation croisée entre le signal de référence et le signal de commande sur la sortie et après leur condition le retard (Z) dans la branche de rétroaction et dans le filtre FIR (7) est établie, de sorte que, sans modification de la conception du système par une reconfiguration une filtrage passe-bande et suppression de la vibration naturelle du répéteur ou du brouilleur externe dans le signal reçu est effectué.

2. Répéteur selon la revendication 1, **caractérisé en ce que** l'amplificateur de répéteur (PA) peut être commuté, et **en ce qu'**un signal de référence est mis hors tension lorsque l'amplificateur (PA) appliquée au signal d'entrée est utilisée et **en ce que** l'amplificateur de répéteur (PA) est un amplificateur adaptatif et rétroactif.

3. Répéteur selon la revendication 1, **caractérisé en ce que** des moyens de commutation sont reliés au filtre FIR (7) et au processeur DSP (10), par lequel il peut être commuté entre le fonctionnement pour l'annulation ou la réduction de l'interférence d'écho.

4. Répéteur selon la revendication 1, **caractérisé en ce que** les moyens pour la conversion de numérique vers le bas (8, D) sont prévues, qui chacun comprend un oscillateur numérique à commande numérique (NCO), et **en ce que** le même oscillateur (NCO) est utilisé pour une conversion élevée en fréquence et numérique I, 12), grâce à quoi une erreur de fréquence par la conversion vers le bas (8, D) est compensée par la conversion vers le haut (I, 12) qui suit et **en ce qu'**entre les moyens pour la conversion de numérique vers le bas (8, D) et pour la conversion de numérique vers le haut (I, 12) un pré-égaliseur adaptatif (V) est disposé, qui est reliée à une entrée additionnelle (C) du répéteur.

5. Répéteur selon la revendication 4, **caractérisé en ce que** les moyens pour le convertisseur numérique vers le bas (8, D) comprenant au moins l'un des moyens pour décimer (D) et un filtre à bande subséquente (H) et **en ce que** les moyens la conversion de numérique vers le haut (I, 12) comprenant au moins un moyen pour intégrer (I) et un filtre demi-bande (H) suivant.

6. Répéteur selon la revendication 1, **caractérisé en ce que** le filtre passe-bande (11) qui est conformé en filtre de canal est un filtre FIR à plusieurs chiffres et avec une phase linéaire, dans lequel les coefficients de filtre sont calculé hors ligne et calculé de telle sorte que ces coefficients de filtre sont identiques pour la composante I et composante Q.

7. Répéteur selon la revendication 1, **caractérisé en ce que** le mélangeur analogique (3) disposé en entrée est relié par l'intermédiaire d'un amplificateur réglable (2) avec un filtre de surface (1) disposé en amont de celui-ci (2) et **en ce que** le mélangeur analogique (16) disposé du côté de la sortie est relié à une aval de filtre de surface d'ondes acoustiques (17) disposé en ayant en et **en ce qu'**un mélangeur double symétrique est utilisé comme un mélangeur analogique (3, 16).

8. Répéteur selon la revendication 1, **caractérisé en ce qu'**entre le mélangeur analogique (3) disposé en entrée et un convertisseur analogique-numérique (5) un filtre passe-bas (4) est disposé et **en ce qu'**entre le mélangeur analogique (16) disposé du côté de la sortie et un convertisseur analogique-numérique (14) un autre filtre passe-bas (15) est disposé.

9. Répéteur selon la revendication 1, **caractérisé en ce que** pour commander les composants de le répéteur un contrôleurs répéteur est reliée au processeur DSP (10).

10. Répéteur selon la revendication 1, **caractérisé en ce que** le duplex filtre adaptatif (DF) est connecté aussi bien avec un amplificateur (LA) et avec un réseau combinant (K).

11. Répéteur selon les revendications 1 et 10, **caractérisé en ce qu'**entre l'amplificateur (LA) de deux répéteurs branches (UZ, DZ) et le mélangeur analogique (3) pour la conversion par abaissement du signal d'entrée un réseau distribué (VN) est disposé.

12. Répéteur selon les revendications 1 et 10, **caractérisé en ce qu'**un amplificateur adaptive et en retour (PA) (une branche de retour par 3' et 5') est relié au réseau combinant (K) de deux répéteurs branches (UZ, DZ), l'entrée du amplificateur (PA) est reliée à la sortie de mélangeur analogique (16).

13. Répéteur selon la revendication 1, **caractérisé en ce qu'**entre le filtre passe-bande (11) et le convertisseur analogique-numérique (14) un égaliseur adaptatif est disposé.
